# EUROPEAN PATENT SPECIFICATION

(11) **EP 2 384 048 B1**
(45) Date of publication and mention of the grant of the patent: **25.05.2016**
(21) Application number: 09836081.1
(22) Date of filing: 31.12.2009
(51) Int. Cl.: H04W 28/06, H04L 29/06

(54) **METHOD AND APPARATUS FOR PROCESSING COMPRESSED MULTIPLEXED MESSAGES**
VERFAHREN UND VORRICHTUNG ZUR VERARBEITUNG VON KOMPRIMIERTEN MULTIPLEX-NACHRICHTEN
PROCÉDÉ ET APPAREIL DE TRAITEMENT DE MESSAGES MULTIPLEXÉS COMPRESSÉS

(30) Priority: 31.12.2008 CN 200810186886
(43) Date of publication of application: 02.11.2011
(73) Proprietor: Huawei Technologies Co., Ltd., Longgang District Shenzhen, Guangdong 518129 (CN)
(72) Inventor: LUO, Shaohua, Longgang District 518129, Shenzhen (CN)
(74) Representative: Kreuz, Georg Maria
(86) International application number: PCT/CN2009/076313
(87) International publication number: WO 2010/075794

(56) References cited:
- CN-A- 1 866 908
- CN-A- 1 889 575
- CN-A- 1 909 513
- CN-A- 101 075 937
- CN-A- 101 442 777
- US-B1- 7 136 377
- ALCATEL-LUCENT: "RTP bearer multiplexing / RTP header compression for SIP-I based Nc", 3GPP DRAFT; C3-080014, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG3, no. Puerto Vallarta, Mexico; 20080115, 15 January 2008 (2008-01-15), XP050033014, [retrieved on 2008-01-15]

## Description

### FIELD OF THE INVENTION

The present invention relates to communication technologies, and in particular, to a method and an apparatus for processing a multiplexing packet with Real-time Transport Protocol (RTP) header compression.

### BACKGROUND OF THE INVENTION

In a 3^{rd} Generation (3G) mobile communication system, after a gateway receives a packet transmitted from an A interface or an Iu interface, the gateway compresses one or more packets corresponding to the same transmitter into a multiplexing packet with RTP header compression to save Internet Protocol (IP) bandwidth, and transmits the multiplexing packet with RTP header compression to another gateway through an Nb interface.

The multiplexing packet with RTP header compression is divided into two formats. When the Nc interface between Mobile Switching Center (MSC) servers is based on a Bearer-Independent Call Control (BICC) protocol, the Nb interface between gateways employs multiplexing packet with RTP header compression for BICC-based Nc; when the Nc interface between the MSC servers is based on a Session Initiation Protocol (SIP), the Nb interface between gateways employs multiplexing packet with RTP header compression for SIP-based Nc.

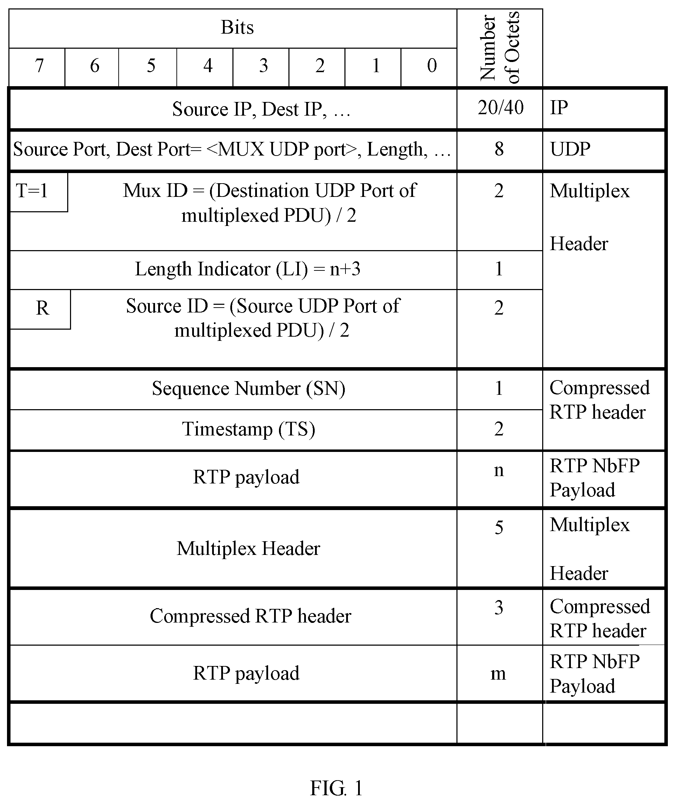

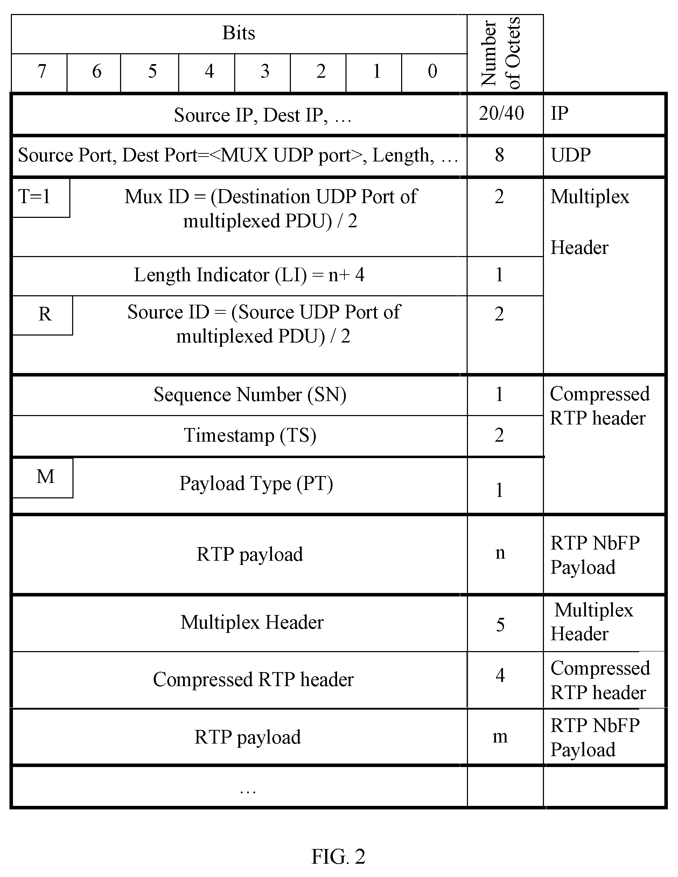

As shown in FIG. 1, in a multiplexing packet with RTP header compression for BICC-based Nc, the compressed RTP header includes a Sequence Number (SN) and a Time Stamp (TS), and occupies three bytes in total. As shown in FIG. 2, in a multiplexing packet with RTP header compression for SIP-based Nc, the compressed RTP header includes an SN, a TS, and a Payload Type (PT), and occupies four bytes in total.

The prior art has the following disadvantages: If the A interface of a Base Station Controller (BSC) and the Iu interface of the Radio Network Controller (RNC) are IP-based, the BSC and the RNC employ multiplexing packet with RTP header compression for SIP-based Nc, and the gateway may employ multiplexing packet with RTP header compression for BICC-based or SIP-based Nc. If the multiplexing packet with RTP header compression transmitted or received by a network device is not compressed or decompressed according to a transport format for multiplexing with RTP header compression corresponding to the network device, no multiplexing packet with RTP header compression can be exchanged between network devices, and the compression multiplexing service will fail.

US 136 337 B1 describes a method for compression and decompression RTP packets. A decompressor performs a full TCRTP decompression on received headers, and passes RTP payloads to a forwarding engine. When the packet is to be shipped out on a TCRTP multiplex, it is sent to a header compressor for compressing.

3GPP TSG-CT WG3 Meeting #47, C3-080014: "RTP bearer multiplexing / RTP header compression for SIP-I based Nc" discloses a MGW supporting two multiplexing of RTP header compression formats on a same IP interface. The two formats are BICC and SIP-I. The format used depends on the type of the Nb bearer set up by the MSC-S.

### SUMMARY OF THE INVENTION

The present invention provides a method according to claim 1 and an apparatus according to claim 3 for processing a multiplexing packet with RTP header compression. In this method, the transport format for multiplexing with RTP header compression corresponding to a specific network device is employed on this network device.

According to the present invention, the transport format for multiplexing with RTP header compression corresponding to each network device such as a gateway, a BSC and an RNC is employed on the corresponding network device, and the multiplexing packet with RTP header compression can be exchanged between the radio-side Iu/A interface and the Nb interface.

### BRIEF DESCRIPTION OF THE DRAWINGS

To make the technical solution in the embodiments of the present invention or in the prior art clearer, the following outlines accompanying drawings involved in the description of the embodiments of the present invention or the prior art. Apparently, the accompanying drawings outlined below are only some exemplary embodiments of the present invention.
FIG. 1 shows a format of a multiplexing packet with RTP header compression for BICC-based Nc in the prior art;
FIG. 2 shows a format of a multiplexing packet with RTP header compression for SIP-based Nc in the prior art;
FIG. 3 is a flowchart of a method for processing a multiplexing packet with RTP header compression according to an exemplary embodiment;
FIG. 4A is a structural block diagram of an apparatus for processing a multiplexing packet with RTP header compression according to an exemplary embodiment;
FIG. 4B is another structural block diagram of an apparatus for processing a multiplexing packet with RTP header compression according to an exemplary embodiment;
FIG. 4C is still another structural block diagram of an apparatus for processing a multiplexing packet with RTP header compression according to the second embodiment of the present invention;
FIG. 4D is a structural block diagram of a compression mode obtaining unit according to an exemplary embodiment;
FIG. 5 is a schematic architectural diagram of a mobile communication system according to an exemplary embodiment;
FIG. 6 is a flowchart of processing a multiplexing packet with RTP header compression according to the third embodiment of the present invention;
FIG. 7 is a flowchart of obtaining a transport format for multiplexing with RTP header compression according to an exemplary embodiment;
FIG 8 is a flowchart of obtaining a transport format for multiplexing with RTP header compression according to an exemplary embodiment;
FIG 9 is a schematic diagram of a format of a negotiation packet according to an exemplary embodiment;
FIG. 10 is a flowchart of obtaining a transport format for multiplexing with RTP header compression according to an exemplary embodiment;
FIG. 11 is a flowchart of obtaining a transport format for multiplexing with RTP header compression according to an exemplary embodiment; and
FIG. 12 is a flowchart of obtaining a transport format for multiplexing with RTP header compression according to an exemplary embodiment;

### DETAILED DESCRIPTION OF THE EMBODIMENTS

To make the objectives, technical solution and merits of the embodiments of the present invention clearer, the following describes the embodiments of the present invention in more detail with reference to the accompanying drawings.

The embodiments of the present invention provide a method and an apparatus for processing a multiplexing packet with RTP header compression. The embodiments of the present invention are detailed below with reference to the accompanying drawings.

### Embodiment 1

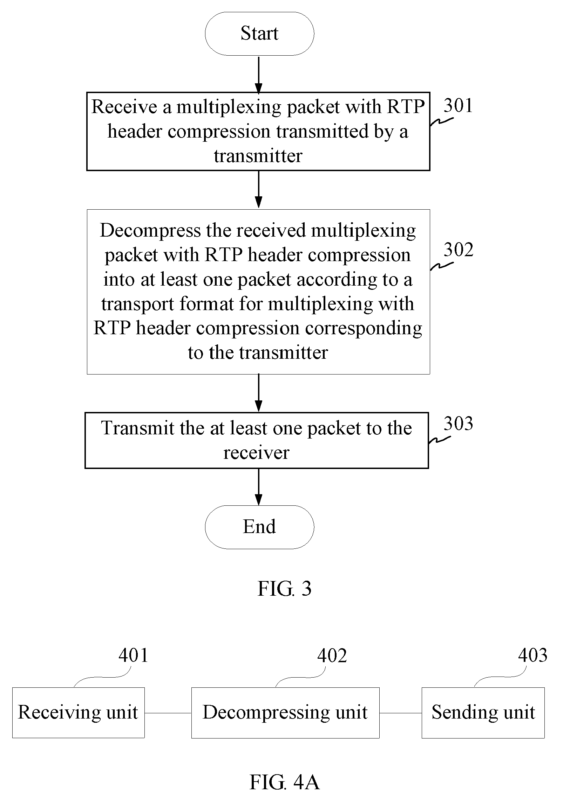

An embodiment provides a method for processing a multiplexing packet with RTP header compression. As shown in FIG. 3, the method includes the following steps:
Step 301: Receive a multiplexing packet with RTP header compression transmitted by a transmitter.
Step 302: Decompress the received multiplexing packet with RTP header compression into at least one packet according to a transport format for multiplexing with RTP header compression corresponding to the transmitter.
Step 303: Transmit the at least one packet to a receiver.

If the transmitter compresses one packet into a multiplexing packet with RTP header compression, the multiplexing packet with RTP header compression is decompressed into only one packet; if the transmitter compresses two or more packets into a multiplexing packet with RTP header compression, the multiplexing packet with RTP header compression is decompressed into two or more packets. At the time of transmitting packets to the receiver, one or more packets may be transmitted to the receiver directly according to the destination IP address in the packets. According to the method for transmitting a multiplexing packet with RTP header compression in this embodiment, those skilled in the art can infer other implementation methods for transmitting a multiplexing packet with RTP header compression from the transmitter. For example, another method for transmitting the multiplexing packet with RTP header compression is: determining the receiver according to the destination IP address in a packet; if each packet has a different destination IP address and each packet corresponds to different receivers, compressing each packet into a multiplexing packet with RTP header compression according to the transport format for multiplexing with RTP header compression corresponding to the receiver, and transmitting the multiplexing packet with RTP header compression to the receiver; if two or more packets have the same destination IP address, compressing the two or more packets into a multiplexing packet with RTP header compression according to the transport format for multiplexing with RTP header compression corresponding to the receiver, and transmitting the multiplexing packet with RTP header compression to the receiver.

In this embodiment, the transport format for multiplexing with RTP header compression includes a SIP-based transport format for multiplexing with RTP header compression or BICC-based transport format for multiplexing with RTP header compression. The transport format for multiplexing with RTP header compression corresponding to the transmitter and the receiver may be a preset transport format, or a transport format determined according to the interface type of the transmitter or receiver, or a transport format determined through negotiation with the transmitter or receiver, or a transport format determined according to whether the transmitter or receiver corresponds to the user plane support mode.

In the case that the transport format for multiplexing with RTP header compression is determined according to the interface type of the transmitter or receiver, if the interface type of the receiver or transmitter is A interface or Iu interface, it is determined that the transmitter or receiver corresponds to the SIP-based transport format for multiplexing with RTP header compression; if the interface type of the receiver or transmitter is Nb interface, it is necessary to further judge whether a user plane support mode indication message which is transmitted by the MSC server and corresponds to the transmitter or receiver is received; if the judgment result is yes, it is determined that the transport format for multiplexing with RTP header compression corresponding to the transmitter or receiver is the BICC-based transport format for multiplexing with RTP header compression; if the judgment result is no, it is determined that the transport format for multiplexing with RTP header compression corresponding to the transmitter or receiver is the SIP-based transport format for multiplexing with RTP header compression.

In the case that the transport format for multiplexing with RTP header compression corresponding to the receiver or transmitter is determined through negotiation with the transmitter or receiver, a negotiation message about the transport format for multiplexing with RTP header compression is received from the transmitter or receiver. The negotiation message about the transport format for multiplexing with RTP header compression includes the transport format for multiplexing with RTP header compression (SIP-based transport format for multiplexing with RTP header compression or BICC-based transport format for multiplexing with RTP header compression) supported by the transmitter or receiver. According to the transport format for multiplexing with RTP header compression supported by the transmitter or receiver and the transport format for multiplexing with RTP header compression supported locally, a response message is sent to the transmitter or receiver. The response message includes the transport format for multiplexing with RTP header compression (SIP-based transport format for multiplexing with RTP header compression or BICC-based transport format for multiplexing with RTP header compression) supported by the transmitter or receiver.

In the case that the transport format for multiplexing with RTP header compression corresponding to the receiver or transmitter is determined through negotiation with the transmitter or receiver, a negotiation message about the transport format for multiplexing with RTP header compression is sent to the transmitter or receiver. The negotiation message about the transport format for multiplexing with RTP header compression includes the transport format for multiplexing with RTP header compression (SIP-based transport format for multiplexing with RTP header compression or BICC-based transport format for multiplexing with RTP header compression) supported locally; a response message to the negotiation message about the transport format for multiplexing with RTP header compression is received from the transmitter or receiver; if the response message indicates that the transport format for multiplexing with RTP header compression supported by the transmitter or receiver is a SIP-based transport format for multiplexing with RTP header compression or BICC-based transport format for multiplexing with RTP header compression, it is determined that the transport format for multiplexing with RTP header compression corresponding to the transmitter or receiver is the transport format for multiplexing with RTP header compression supported by the transmitter or receiver; if the response message indicates that the transport format for multiplexing with RTP header compression supported by the transmitter or receiver includes both SIP-based and BICC-based transport formats, it is necessary to further judge whether a user plane support mode indication message which is transmitted by the MSC server and corresponds to the transmitter or receiver is received; if a user plane support mode indication message corresponding to the transmitter or receiver is received, it is determined that the transport format for multiplexing with RTP header compression corresponding to the receiver or transmitter is the BICC-based transport format for multiplexing with RTP header compression; if no user plane support mode indication message corresponding to the transmitter or receiver is received, it is determined that the transport format for multiplexing with RTP header compression corresponding to the receiver or transmitter is the SIP-based transport format for multiplexing with RTP header compression.

In this embodiment, the transmitter may be a BSC or RNC, and the receiver may be a gateway or may be another BSC or RNC, where the BSC or RNC is different from the transmitter.

This embodiment brings the following benefits: Because the transport format for multiplexing with RTP header compression corresponding to a network device is employed on this network device, the multiplexing packet with RTP header compression can be exchanged between network devices.

### Embodiment 2

An embodiment provides an apparatus for processing a multiplexing packet with RTP header compression. As shown in FIG. 4A, the apparatus includes: a receiving unit 401, configured to receive a multiplexing packet with RTP header compression transmitted by a transmitter; a decompressing unit 402, configured to decompress the received multiplexing packet with RTP header compression into at least one packet according to a transport format for multiplexing with RTP header compression corresponding to the transmitter; and a sending unit 403, configured to transmit the at least one packet to a receiver.

In this embodiment, the apparatus for processing a multiplexing packet with RTP header compression may be set independently, or integrated in a gateway of the mobile communication system. The transmitter may be a BSC or RNC, and the receiver may be a gateway, another BSC or another RNC.

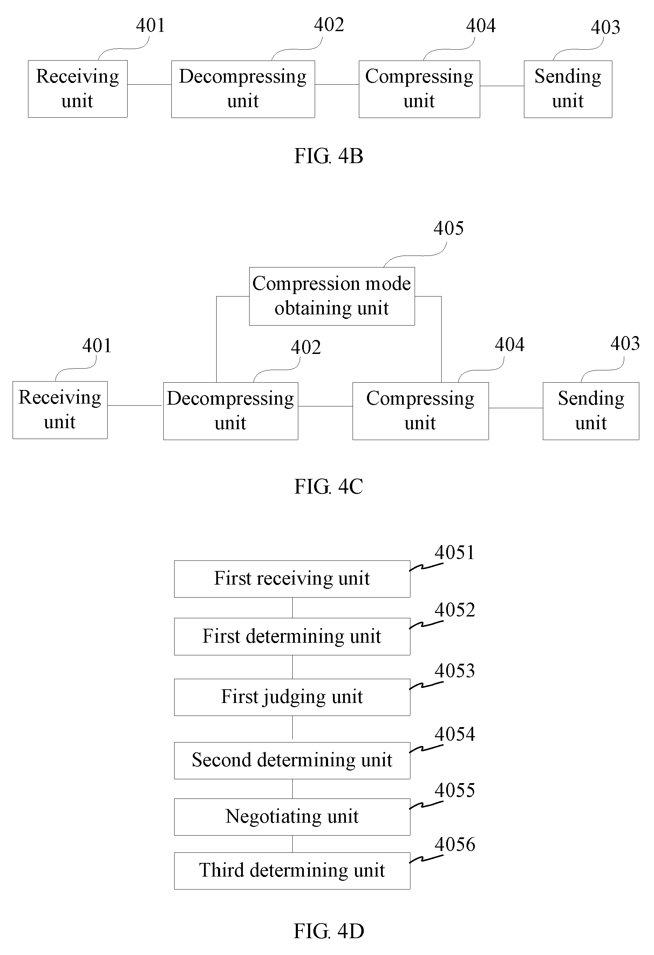

As shown in FIG. 4B, the apparatus for processing a multiplexing packet with RTP header compression in this embodiment further includes a compressing unit 404, configured to compress the packets according to the receiver of the packet and a transport format for multiplexing with RTP header compression corresponding to the receiver. The sending unit 403 is configured to transmit the compressed multiplexing packet with RTP header compression to the receiver.

The apparatus for processing a multiplexing packet with RTP header compression can decompress the received multiplexing packet with RTP header compression into at least one packet by using the transport format for multiplexing with RTP header compression corresponding to the transmitter according to the transport format for multiplexing with RTP header compression which is preset in the apparatus and corresponds to the transmitter and receiver. When the apparatus for processing a multiplexing packet with RTP header compression transmits the multiplexing packet with RTP header compression to the receiver, the apparatus determines the receiver corresponding to the packet according to the destination IP address of the packet. If each packet has a different destination IP address and corresponds to a different receiver, the apparatus compresses each packet into a multiplexing packet with RTP header compression according to the transport format for multiplexing with RTP header compression corresponding to the receiver, and transmits the multiplexing packet with RTP header compression to the receiver; if two or more packets have the same destination IP address, the apparatus compresses the two or more packets into a multiplexing packet with RTP header compression according to the transport format for multiplexing with RTP header compression corresponding to the receiver, and transmits the multiplexing packet with RTP header compression to the receiver.

The apparatus for processing a multiplexing packet with RTP header compression in this embodiment may also determine the transport format for multiplexing with RTP header compression corresponding to the transmitter or receiver according to the interface of the transmitter or receiver and the interface type that are delivered by the MSC server; or the apparatus for processing a multiplexing packet with RTP header compression negotiates the transport format for multiplexing with RTP header compression with the transmitter or receiver, and determines the transport format for multiplexing with RTP header compression corresponding to the receiver or transmitter according to the negotiation result; or the apparatus determines the transport format for multiplexing with RTP header compression corresponding to the receiver or transmitter according to the user plane support mode indication message which is delivered by the MSC server and corresponds to the transmitter or receiver.

As shown in FIG. 4C, the apparatus for processing a multiplexing packet with RTP header compression in this embodiment may further include a compression mode obtaining unit 405, which is configured to obtain the transport format for multiplexing with RTP header compression corresponding to the transmitter or receiver.

As shown in FIG. 4D, the compression mode obtaining unit 405 further includes: a first receiving unit 4051, configured to receive an indication message from the MSC server, where the indication message indicates the interface type of the interface corresponding to the transmitter or receiver; a first determining unit 4052, configured to determine that the transport format for multiplexing with RTP header compression corresponding to the transmitter or receiver is a SIP-based transport format for multiplexing with RTP header compression if the interface type is A interface or Iu interface; a first judging unit 4053, configured to judge whether a user plane support mode indication message which is transmitted by the server and corresponds to the transmitter or receiver is received if the interface type is Nb interface; a second determining unit 4054, configured to: determine that the transport format for multiplexing with RTP header compression corresponding to the transmitter or receiver is a BICC-based transport format for multiplexing with RTP header compression if the judgment result of the first judging unit 4053 is yes; or determine that the transport format for multiplexing with RTP header compression corresponding to the transmitter or receiver is to a SIP-based transport format for multiplexing with RTP header compression if the judgment result of the first judging unit 4053 is no; a negotiating unit 4055, configured to negotiate with the transmitter or receiver; and a third determining unit 4056, configured to determine the transport format for multiplexing with RTP header compression corresponding to the transmitter or receiver according to the negotiation result.

In this embodiment, if the apparatus for processing a multiplexing packet with RTP header compression receives no user plane transparent mode indication message or receives a user plane transparent mode indication message corresponding to the receiver or transmitter, the second judging unit judges that no user plane support mode indication message is received, and the second determining unit determines that the receiver or transmitter corresponds to the SIP-based transport format for multiplexing with RTP header compression.

This embodiment brings the following benefits: Because the transport format for multiplexing with RTP header compression corresponding to a network device is employed on this network device, the multiplexing packet with RTP header compression can be exchanged between network devices.

### Embodiment 3

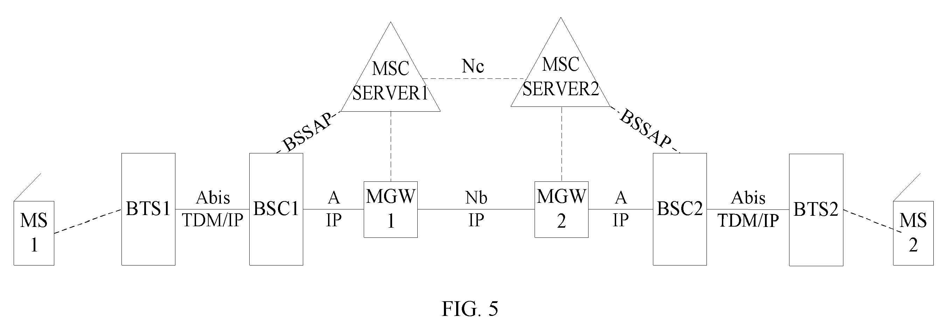

As shown in FIG. 5, in this embodiment, the interface between BSC1 and Media Gateway 1 (MGW1) is an A interface, the interface between BSC2 and MGW2 is an A interface, the interface between MGW1 and MGW2 is an Nb interface, and the interface between MSC server 1 and MSC server 2 is an Nc interface. The BSC1 sends the multiplexing packet with RTP header compression to the MGW1 through the A interface, and the MGW1 transmits the multiplexing packet with RTP header compression to the MGW2 through the Nb interface.

For ease of describing the procedure for processing the multiplexing packet with RTP header compression in the embodiment, the following describes a procedure for processing a received multiplexing packet with RTP header compression in the MGW1 (taking the procedure for processing the multiplexing packet with RTP header compression between BSC1 and MGW1 as an example), and a procedure for processing a multiplexing packet with RTP header compression to be sent from MGW1 (taking the procedure for processing the multiplexing packet with RTP header compression between MGW1 and MGW2 as an example).

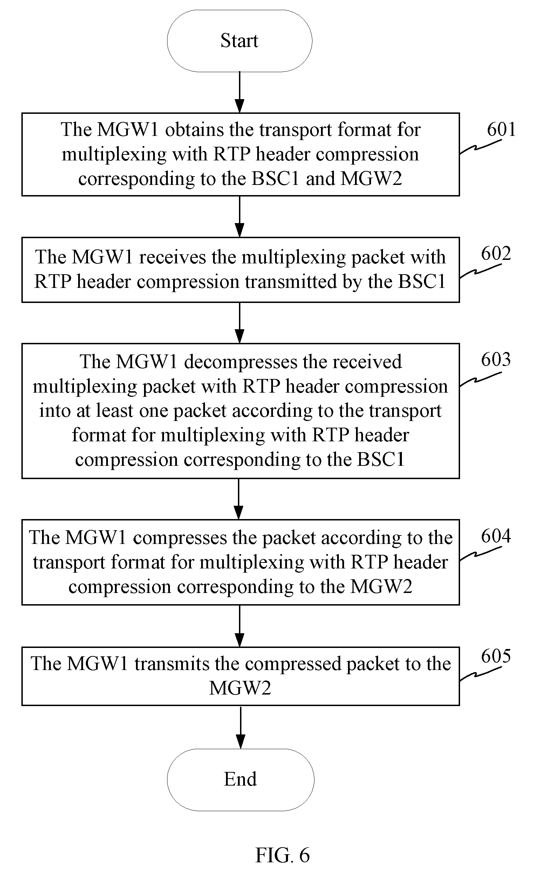

As shown in FIG. 6, the MGW1 in this embodiment processes a multiplexing packet with RTP header compression through the following steps:
Step 601: The MGW1 obtains the transport format for multiplexing with RTP header compression corresponding to the BSC1 and MGW2.
Step 602: The MGW1 receives the multiplexing packet with RTP header compression transmitted by the BSC1.
Step S603: The MGW1 decompresses the received multiplexing packet with RTP header compression into at least one packet according to the transport format for multiplexing with RTP header compression corresponding to the BSC1.
Step 604: The MGW1 compresses the packet according to the transport format for multiplexing with RTP header compression corresponding to the MGW2.
Step 605: The MGW1 transmits the compressed packet to the MGW2.

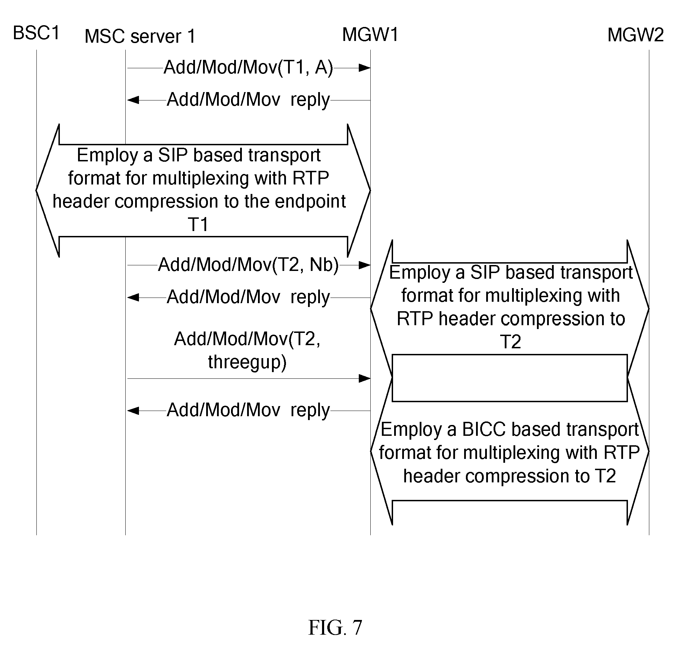

As shown in FIG. 7, the MGW1 obtains the transport format for multiplexing with RTP header compression corresponding to the BSC1 and MGW2 through the following steps:
The MSC server 1 creates a session on the MGW1, and adds an endpoint T1 on the BSC1. The MSC server 1 transmits the interface type (A interface) of the endpoint T1 to the MGW1 through an ADD/MOD/MOV message. The endpoint T1 corresponds to the BSC1. The MGW1 returns an ADD/MOD/MOV reply message to the MSC server 1. The MGW1 knows that the interface type of the BSC1 corresponding to the receiving endpoint T1 is A interface according to the ADD/MOD/MOV message, and determines that the BSC1 corresponds to a SIP-based transport format for multiplexing with RTP header compression according to the A interface. The MSC server 1 adds an endpoint T2 on the core network Nb side, and sets the interface type of the endpoint T2 to Nb interface, and indicates the interface type to the MGW1 through an ADD/MOD/MOV message. The endpoint T2 corresponds to the MGW2. The MGW1 returns an ADD/MOD/MOV reply message to the MSC server 1. The MGW1 further judges whether the MSC server 1 has delivered a user plane support mode threegup=Supp to the endpoint T2. If the MGW1 has received the threegup=Supp information delivered to the endpoint T2, it indicates that the MGW2 corresponding to the transmitting endpoint T2 employs the user plane support mode, and the MGW1 determines that the MGW2 corresponding to the endpoint T2 employs the BICC-based transport format for multiplexing with RTP header compression. If the MGW1 has received no threegup message delivered to the endpoint T2 or has received a threegup=Trans (user plane transparent mode) message delivered to the endpoint T2, the MGW1 determines that the MGW2 corresponds to the SIP-based transport format for multiplexing with RTP header compression.

For ease of describing the implementation procedure in this embodiment, the BSC and MGW are taken as examples to describe how to transmit a multiplexing packet with RTP header compression between the BSC and the MGW. However, based on the description in this embodiment, those skilled in the art can identify the type of the Iu interface of the RNC, and determine that the RNC corresponds to the SIP-based transport format for multiplexing with RTP header compression according to the Iu interface type.

In this embodiment, the MGW1 is neither the transmitter nor the receiver. For ease of describing the implementation procedure in this embodiment, the transmitter refers to the BSC1 which sends the multiplexing packet with RTP header compression to the MGW1, and the receiver refers to the MGW2 which receives the multiplexing packet with RTP header compression from the MGW1.

This embodiment brings these benefits: The transport format for multiplexing with RTP header compression corresponding to each network device such as the MGW, BSC and RNC is employed on the corresponding network device, and the multiplexing packet with RTP header compression can be exchanged between the radio-side Iu/A interface and the Nb interface.

### Embodiment 4

This embodiment differs from the third embodiment in that: The MGW1 obtains the transport format for multiplexing with RTP header compression corresponding to the BSC1 and MGW2 by negotiating with the BSC1 and MGW 2.

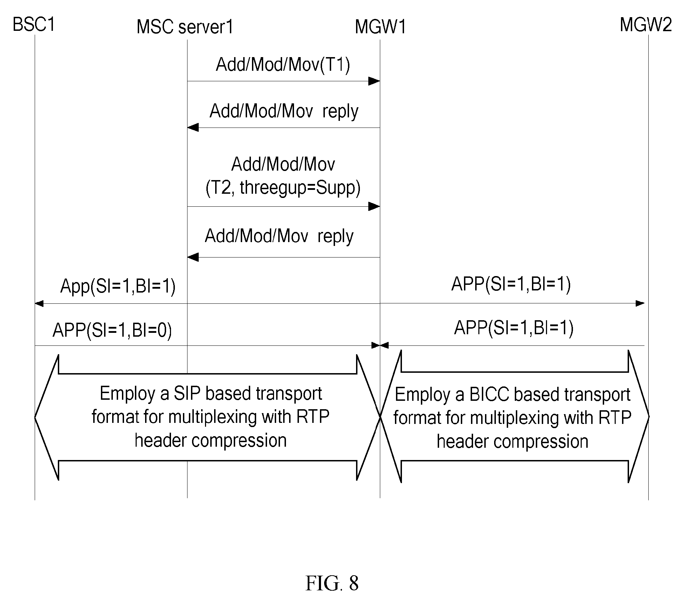

As shown in FIG. 8, the MGW1 obtains the transport format for multiplexing with RTP header compression corresponding to the BSC1 and MGW2 through the following steps:
The MSC server 1 creates a session on the MGW1, adds an endpoint T1 on the BSC1, and transmits the endpoint T1 of the BSC1 to the MGW1 through an ADD/MOD/MOV message. The endpoint T1 corresponds to the BSC1. The MGW1 returns an ADD/MOD/MOV reply message to the MSC server 1. The MSC server 1 adds an endpoint T2 on the core network Nb side, and delivers a user plane support mode to the endpoint T2 through an Add/Mod/Mov(T2, threegup=Supp) message. The MGW1 returns an ADD/MOD/MOV reply message to the MSC server 1.

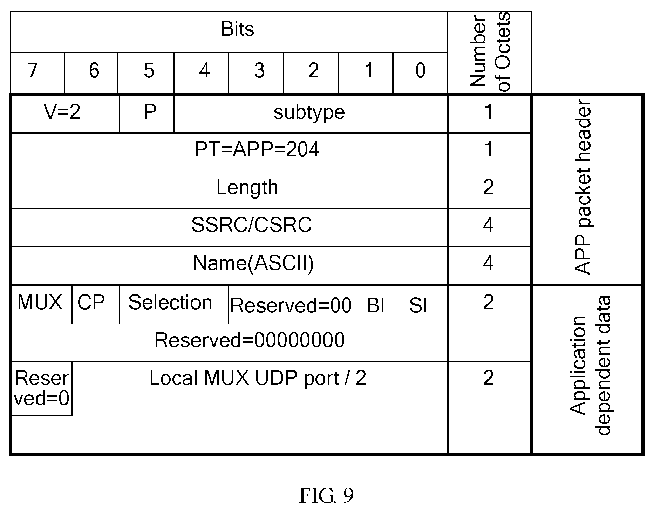

The MGW1 sends an APP negotiation packet to the BSC1 actively. As shown in FIG. 9, the negotiation packet remains unchanged except the change of the Reserved field in the negotiation packet to keep compatible with the existing version. The 4-bit Reserved field after Selection uses the lower two bits for negotiating the transport format for multiplexing with RTP header compression. When CP=0, no compression multiplexing is supported, and no compression mode negotiation is required. SI indicates whether the SIP-based transport format for multiplexing with RTP header compression is supported locally. SI=0 indicates that the SIP-based transport format for multiplexing with RTP header compression is not supported locally, and SI=1 indicates that the SIP-based transport format for multiplexing with RTP header compression is supported locally. BI indicates whether the BICC-based transport format for multiplexing with RTP header compression is supported locally. BI=0 indicates that the BICC-based transport format for multiplexing with RTP header compression is not supported locally, and BI=1 indicates that the BICC-based transport format for multiplexing with RTP header compression is supported locally.

As shown in FIG. 8, the MGW1 supports both the SIP-based transport format for multiplexing with RTP header compression and the BICC-based transport format for multiplexing with RTP header compression. The MGW1 writes "BI=1,SI=1" in the negotiation packet to initiate negotiation. If the BSC1 decides to perform compression multiplexing, the BSC1 sends an RTCP negotiation packet that carries "BI=0,SI=1". After receiving the packet, the MGW1 determines that the BSC1 corresponds to a SIP-based transport format for multiplexing with RTP header compression. According to the received negotiation packet, the BSC1 knows that the MGW1 supports both SIP and BICC-based transport formats for multiplexing with RTP header compression. Therefore, the BSC1 uses the SIP-based transport format for multiplexing with RTP header compression supported by itself to send a multiplexing packet with RTP header compression to the MGW1.

As shown in FIG. 8, a negotiation packet is transmitted between the MGW1 and the MGW2, and the MGW1 writes "BI=1,SI=1" in the negotiation packet to initiate negotiation. The MGW2 writes "BI=1,SI=1" in the negotiation packet. The MGW1 knows that the MGW2 supports both transport formats for multiplexing with RTP header compression. Because the MGW2 supports both SIP-based and BICC-based transport formats for multiplexing with RTP header compression and the MGW2 employs the user plane support mode, the MGW1 determines that the media terminal corresponds to the BICC-based transport format for multiplexing with RTP header compression.

Those skilled in the art can change the format of the negotiation packet according to the description in this embodiment. For example, the MGW1 writes "BI=1,SI=0" in the negotiation packet destined for the MGW2 and transmits only the supported BICC-based transport format for multiplexing with RTP header compression to the MGW2, and the MGW2 writes "BI=1,SI=0" in the negotiation packet to be returned to the MGW1 and transmits only the supported BICC-based transport format for multiplexing with RTP header compression to the MGW1, and therefore, the MGW1 determines that the MGW2 corresponds to the BICC-based transport format for multiplexing with RTP header compression according to the negotiation result, and the MGW2 determines that the MGW1 corresponds to the BICC-based transport format for multiplexing with RTP header compression according to the negotiation result. Or, the MGW1 writes "BI=0,SI=1" in the negotiation packet destined for MGW2, and transmits only the supported SIP-based transport format for multiplexing with RTP header compression to MGW2, and MGW2 writes "BI=0,SI=1" in the negotiation packet to be returned to MGW1, and transmits only the supported SIP-based transport format for multiplexing with RTP header compression to the MGW1, and therefore, the MGW1 determines that the MGW2 corresponds to the SIP-based transport format for multiplexing with RTP header compression according to the negotiation result, and the MGW2 determines that the MGW1 corresponds to the SIP-based transport format for multiplexing with RTP header compression according to the negotiation result.

For ease of describing the implementation procedure in this embodiment, the BSC and MGW are taken as examples to describe how to transmit a multiplexing packet with RTP header compression between the BSC and the MGW. However, based on the description in this embodiment, those skilled in the art can identify the type of the Iu interface of the RNC, and determine that the RNC corresponds to the SIP-based transport format for multiplexing with RTP header compression according to the Iu interface type.

This embodiment brings these benefits: The transport format for multiplexing with RTP header compression corresponding to each network device such as the MGW, BSC and RNC is employed on the corresponding network device, and the multiplexing packet with RTP header compression can be exchanged between the radio-side Iu/A interface and the Nb interface.

### Embodiment 5

This embodiment differs from the fourth embodiment in that: The BSC1 and MGW2 send a negotiation packet to the MGW1 to negotiate the transport format for multiplexing with RTP header compression. The format of the negotiation packet between the BSC1 and the MGW1, and the format of the negotiation packet between the MGW2 and the MGW1 are the same as the format of the negotiation packet in the previous embodiment.

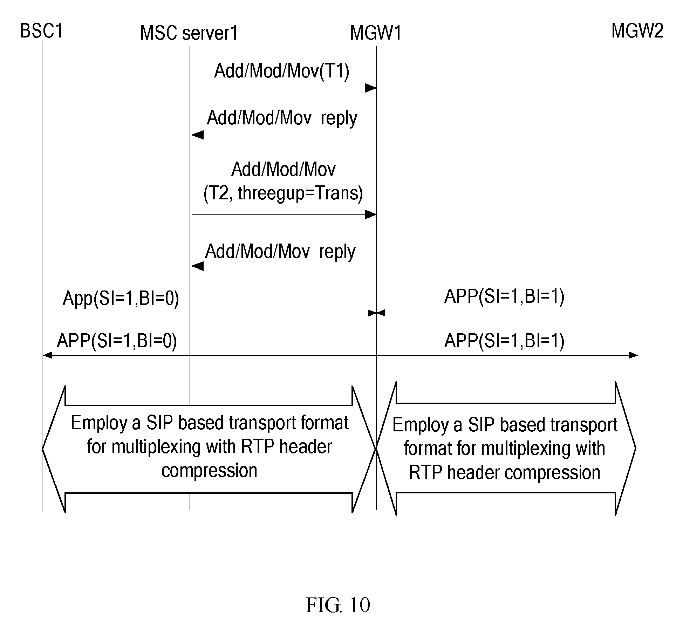

In this embodiment, as shown in FIG. 10, when the MSC server 1 creates a session between the MGW1 and the MGW2, and, when the MSC server 1 adds an endpoint T2 on the MGW1 side and the endpoint is directed to the MGW1, the MSC server 1 sends an Add/Mod/Mov(T2, threegup=Trans) message, indicating that the endpoint T2 employs a user plane transparent mode. After receiving the negotiation packet from the MGW2, the MGW1 determines that the MGW2 supports both transport formats for multiplexing with RTP header compression. Because the MGW2 supports both SIP-based and BICC-based transport formats for multiplexing with RTP header compression and the MGW2 employs the user plane transparent mode, the MGW1 determines that the MGW2 corresponds to the SIP-based transport format for multiplexing with RTP header compression.

In this embodiment, if the MGW1 has received no threegup message delivered by the MSC server 1 to the endpoint T2, the MGW1 determines that the MGW2 corresponds to the SIP-based transport format for multiplexing with RTP header compression according to the SIP-based and BICC-based transport formats for multiplexing with RTP header compression supported by the MGW2.

This embodiment brings these benefits: The transport format for multiplexing with RTP header compression corresponding to each network device such as the MGW, BSC and RNC is employed on the corresponding network device, and the multiplexing packet with RTP header compression can be exchanged between the radio-side Iu/A interface and the Nb interface.

### Embodiment 6

This embodiment differs from the third embodiment in that: The MGW1 obtains the transport format for multiplexing with RTP header compression corresponding to the BSC1 and MGW2 according to the user plane mode of the BSC1 and MGW 2 indicated by the MSC server 1.

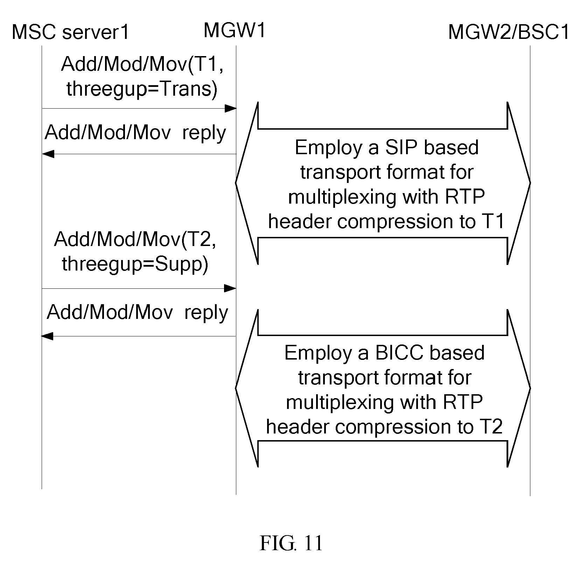

As shown in FIG. 11, the MGW1 obtains the transport format for multiplexing with RTP header compression corresponding to the BSC1 and MGW2 through the following steps:
The MSC server 1 creates a session between the BSC1 and the MGW1. When the MGW1 adds an endpoint T1, the MSC server 1 delivers a user plane transparent mode to the endpoint T1 through an Add/Mod/Mov(T1, threegup=Trans) message. The MGW1 returns an ADD/MOD/MOV reply message to the MSC server 1. The MGW1 determines that the BSC1 corresponds to the SIP-based transport format for multiplexing with RTP header compression according to the user plane transparent mode corresponding to the endpoint T1 on the BSC1 side.

When the MSC server 1 creates a session between the MGW1 and the MGW2, and, when the MGW1 adds an endpoint T2, the MSC server 1 delivers a user plane support mode to the endpoint T2 through an Add/Mod/Mov(T2, threegup=Supp) message. The MGW1 returns an ADD/MOD/MOV reply message to the MSC server 1. The MGW1 determines that the MGW2 corresponds to the BICC-based transport format for multiplexing with RTP header compression according to the user plane support mode corresponding to the endpoint T2.

For ease of describing the implementation procedure in this embodiment, the BSC and MGW are taken as examples to describe how to transmit a multiplexing packet with RTP header compression between the BSC and the MGW. However, based on the description in this embodiment, those skilled in the art can identify the type of the Iu interface of the RNC, and determine that the RNC corresponds to the SIP-based transport format for multiplexing with RTP header compression according to the Iu interface type.

This embodiment brings these benefits: The transport format for multiplexing with RTP header compression corresponding to each network device such as the MGW, BSC and RNC is employed on the corresponding network device, and the multiplexing packet with RTP header compression can be exchanged between the radio-side Iu/A interface and the Nb interface.

### Embodiment 7

This embodiment differs from the third embodiment in that: The MGW1 obtains the transport format for multiplexing with RTP header compression corresponding to the BSC1 and MGW2 according to the user plane mode of the BSC1 and MGW 2 indicated by the MSC server 1.

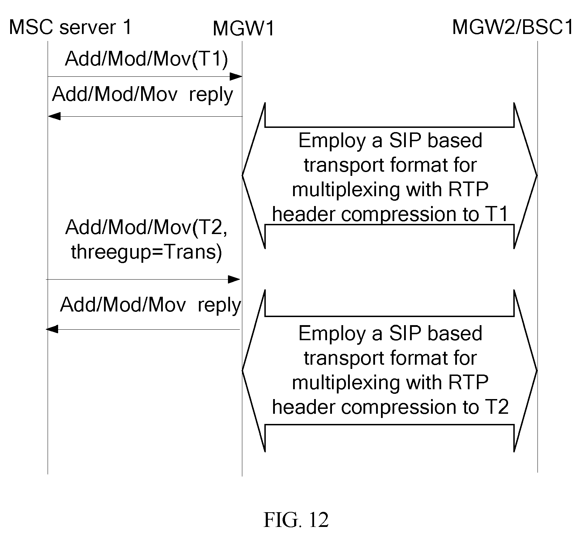

As shown in FIG. 12, the MGW1 obtains the transport format for multiplexing with RTP header compression corresponding to the BSC1 and MGW2 through the following steps:
The MSC server 1 creates a session between the BSC1 and the MGW1. When the MGW1 adds an endpoint T1, the MSC server 1 transmits only an Add/Mod/Mov(T1) message to the MGW1 without delivering the user plane mode indication to the endpoint T1. The MGW1 returns an ADD/MOD/MOV reply message to the MSC server 1. Because the MSC server 1 delivers no user plane support mode indication message to the endpoint T1, the MGW1 determines that the BSC1 corresponding to the endpoint T1 corresponds to the SIP-based transport format for multiplexing with RTP header compression.

When the MSC server 1 creates a session between the MGW1 and the MGW2, and, when the MGW1 adds an endpoint T2, the MSC server 1 delivers a user plane transparent mode to the endpoint T2 of the MGW1 through an Add/Mod/Mov(T1, threegup=Trans) message. The MGW1 returns an ADD/MOD/MOV reply message to the MSC server 1. The MGW1 determines that the MGW2 corresponds to the SIP-based transport format for multiplexing with RTP header compression according to the user plane transparent mode corresponding to the endpoint T2.

For ease of describing the implementation procedure in this embodiment, the BSC and MGW are taken as examples to describe how to transmit a multiplexing packet with RTP header compression between the BSC and the MGW. However, based on the description in this embodiment, those skilled in the art can identify the type of the Iu interface of the RNC, and determine that the RNC corresponds to the SIP-based transport format for multiplexing with RTP header compression according to the Iu interface type.

This embodiment brings these benefits: The transport format for multiplexing with RTP header compression corresponding to each network device such as the MGW, BSC and RNC is employed on the corresponding network device, and the multiplexing packet with RTP header compression can be exchanged between the radio-side Iu/A interface and the Nb interface.

According to the descriptions above, those skilled in the art understand that the present invention may be implemented by hardware only, or preferably in most circumstances, by software and a necessary universal hardware platform. Based on such understandings, the essence of the technical solution under the present invention or contributions to the prior art of the technical solution under the present invention may be embodied in a software product. The software product is stored in a storage medium. The software product incorporates several instructions that enable a terminal device (such as a mobile phone, a personal computer, a server, or a network device) to execute the methods disclosed in any embodiment of the present invention.

It should be noted that the preceding descriptions are merely exemplary embodiments of the present invention.

## Claims

1. A method for processing a multiplexing packet with Real-time Transport Protocol, RTP, header compression, for use in a network comprising a transmitter, a first Media Gateway, MGW1, a Mobile Switching Center Server, MSC Server, and a second Media Gateway, MGW2, wherein the transmitter is a Base Station Controller, BSC, or a Radio Network Controller, RNC, the method comprising:
obtaining (601), by the MGW1, the transport format for multiplexing with RTP header compression corresponding to the transmitter and the MGW2;
receiving (602), by the MGW1, a multiplexing packet with RTP header compression transmitted by the transmitter;
decompressing (603), by the MGW1, the received multiplexing packet with RTP header compression into at least one packet according to a transport format for multiplexing with RTP header compression corresponding to the transmitter;
compressing (604), by the MGW1, the at least one packet according to the transport format for
multiplexing with RTP header compression corresponding to the MGW2; and
transmitting (605), by the MGW1, the compressed packet to the MGW2;
wherein the step of obtaining, by the MGW1, the transport format for multiplexing with RTP header compression corresponding to the transmitter comprises:
receiving, by the MGW1, an indication message transmitted by the MSC Server, wherein the indication message carries an interface type of an interface corresponding to the transmitter; and
determining, by the MGW1, that the transport format for multiplexing with RTP header compression corresponding to the transmitter is a SIP-based transport format for multiplexing with RTP header compression if the interface type is A interface or Iu interface.

2. The method according to claim 1, wherein:
the transport format for multiplexing with RTP header compression corresponding to the transmitter or the MGW2 comprises a Session Initiation Protocol, SIP, based transport format for multiplexing with RTP header compression or a Bearer-Independent Call Control, BICC, based transport format for multiplexing with RTP header compression.

3. An apparatus for processing a multiplexing packet with Real-time Transport Protocol, RTP, header compression, wherein the apparatus is a first Media Gateway, MGW1 which is connectable with a transmitter, a Mobile Switching Center Server, MSC Server, and a second Media Gateway, MGW2, wherein the transmitter is a Base Station Controller, BSC, or a Radio Network Controller, RNC, the apparatus comprising:
a compression mode obtaining unit (405), configured to obtain the transport format for multiplexing with RTP header compression corresponding to the transmitter and the MGW2;
a receiving unit (401), configured to receive a multiplexing packet with RTP header compression transmitted by thetransmitter;
a decompressing unit (402), configured to decompress the received multiplexing packet with RTP header compression into at least one packet according to a transport format for multiplexing with RTP header compression corresponding to the transmitter;
a compressing unit (404), configured to compress the at least one packet according to the transport
format for multiplexing with RTP header compression corresponding to the MGW2; and
a sending unit (403), configured to transmit the compressed packet to the MGW2; and
wherein the MGW1 is further configured to obtain the transport format for multiplexing with RTP header compression corresponding to the transmitter by:
receiving an indication message transmitted by the MSC Server, wherein the indication message carries an interface type of an interface corresponding to the transmitter; and
determining that the transport format for multiplexing with RTP header compression corresponding to the transmitter is a SIP-based transport format for multiplexing with RTP header compression if the interface type is A interface or Iu interface.

## Patentansprüche

1. Verfahren zum Verarbeiten eines Multiplexierpaketes mit "Real-Time Transport Protocol (RTP)-Header-Kompression" zur Verwendung in einem Netzwerk, das einen Sender, einen ersten Medien-Gateway (MGW1), einen "Mobile Switching Center-Server" (MSC-Server) und einen zweiten Medien-Gateway (MGW2) umfasst, wobei der Sender eine Basisstationssteuereinheit ("Base Station Controller", BSC) oder eine Funknetzsteuereinheit ("Radio Network Controller", RNC) ist, wobei das Verfahren Folgendes umfasst:
Erhalten (601), durch den MGW1, des Transportformats zum Multiplexieren mit RTP-Header-Kompression entsprechend dem Sender und dem MGW2;
Empfangen (602), durch den MGW1, eines Multiplexierpaketes mit RTP-Header-Kompression, das durch den Sender gesendet wurde;
Dekomprimieren (603), durch den MGW1, des empfangenen Multiplexierpaketes mit RTP-Header-Kompression in mindestens ein Paket gemäß einem Transportformat zum Multiplexieren mit RTP-Header-Kompression entsprechend dem Sender;
Komprimieren (604), durch den MGW1, des mindestens einen Paketes gemäß dem Transportformat zum Multiplexieren mit RTP-Header-Kompression entsprechend dem MGW2; und
Senden (605), durch den MGW1, des komprimierten Paketes an den MGW2,
wobei der Schritt des Erhaltens, durch den MGW1, des Transportformats zum Multiplexieren mit RTP-Header-Kompression entsprechend dem Sender Folgendes umfasst:
Empfangen, durch den MGW1, einer durch den MSC-Server gesendeten Hinweisnachricht, wobei die Hinweisnachricht einen Schnittstellentyp einer Schnittstelle entsprechend dem Sender transportiert; und
Bestimmen, durch den MGW1, dass das Transportformat zum Multiplexieren mit RTP-Header-Kompression entsprechend dem Sender ein SIP-basiertes Transportformat zum Multiplexieren mit RTP-Header-Kompression ist, wenn der Schnittstellentyp eine A-Schnittstelle oder eine Iu-Schnittstelle ist.

2. Verfahren nach Anspruch 1, wobei:
das Transportformat zum Multiplexieren mit RTP-Header-Kompression entsprechend dem Sender oder der MGW2 ein "Session Initiation Protocol (SIP)"-basiertes Transportformat zum Multiplexieren mit RTP-Header-Kompression oder ein "Bearer-Independent Call Control (BICC)"-basiertes Transportformat zum Multiplexieren mit RTP-Header-Kompression umfasst.

3. Vorrichtung zum Verarbeiten eines Multiplexierpaketes mit "Real-Time Transport Protocol (RTP)-Header-Kompression", wobei die Vorrichtung ein erster Medien-Gateway (MGW1) ist, der mit einem Sender, einem "Mobile Switching Center-Server" (MSC-Server) und einem zweiten Medien-Gateway (MGW2) verbunden werden kann, wobei der Sender eine Basisstationssteuereinheit ("Base Station Controller", BSC) oder eine Funknetzsteuereinheit ("Radio Network Controller", RNC) ist, wobei die Vorrichtung Folgendes umfasst:
eine Kompressionsmoduserhaltseinheit (405), die dafür konfiguriert ist, das Transportformat zum Multiplexieren mit RTP-Header-Kompression entsprechend dem Sender und dem MGW2 zu erhalten;
eine Empfangseinheit (401), die dafür konfiguriert ist, ein Multiplexierpaket mit RTP-Header-Kompression zu empfangen, das durch den Sender gesendet wurde;
eine Dekomprimierungseinheit (402), die dafür konfiguriert ist, das empfangene Multiplexierpaket mit RTP-Header-Kompression in mindestens ein Paket gemäß einem Transportformat zum Multiplexieren mit RTP-Header-Kompression entsprechend dem Sender zu dekomprimieren;
eine Komprimierungseinheit (404), die dafür konfiguriert ist, das mindestens eine Paket gemäß dem Transportformat zum Multiplexieren mit RTP-Header-Kompression entsprechend dem MGW2 zu komprimieren; und
eine Sendeeinheit (403), die dafür konfiguriert ist, das komprimierte Paket an den MGW2 zu senden; und
wobei der MGW1 des Weiteren dafür konfiguriert ist, das Transportformat zum Multiplexieren mit RTP-Header-Kompression entsprechend dem Sender zu erhalten durch:
Empfangen einer durch den MSC-Server gesendeten Hinweisnachricht, wobei die Hinweisnachricht einen Schnittstellentyp einer Schnittstelle entsprechend dem Sender transportiert; und
Bestimmen, dass das Transportformat zum Multiplexieren mit RTP-Header-Kompression entsprechend dem Sender ein SIP-basiertes Transportformat zum Multiplexieren mit RTP-Header-Kompression ist, wenn der Schnittstellentyp eine A-Schnittstelle oder eine Iu-Schnittstelle ist.

## Revendications

1. Procédé de traitement d'un paquet de multiplexage avec compression d'en-tête par protocole de transport en temps réel, RTP, destiné à être utilisé dans un réseau comprenant un émetteur, une première passerelle de média, MGW1, un serveur de commutateur de service mobile, serveur MSC, et une seconde passerelle de média, MGW2, l'émetteur étant un contrôleur de station de base, BSC, ou un contrôleur de réseau de radiocommunication, RNC, le procédé consistant à :
obtenir (601), par la MGW1, le format de transport pour multiplexage avec compression d'en-tête RTP correspondant à l'émetteur et à la MGW2 ;
recevoir (602), par la MGW1, un paquet de multiplexage avec compression d'en-tête RTP transmis par l'émetteur ;
décompresser (603), par la MGW1, le paquet de multiplexage reçu avec compression d'en-tête RTP en au moins un paquet selon un format de transport pour multiplexage avec compression d'en-tête RTP correspondant à l'émetteur ;
compresser (604), par la MGW1, l'au moins un paquet selon le format de transport pour multiplexage avec compression d'en-tête RTP correspondant à la MGW2 ; et
transmettre (605), par la MGW1, le paquet compressé à la MGW2 ;
dans lequel l'étape consistant à obtenir, par la MGW1, le format de transport pour multiplexage avec compression d'en-tête RTP correspondant à l'émetteur consiste à :
recevoir, par la MGW1, un message d'indication transmis par le serveur MSC, le message d'indication transportant un type d'interface d'une interface correspondant à l'émetteur ; et
déterminer, par la MGW1, que le format de transport pour multiplexage avec compression d'en-tête RTP correspondant à l'émetteur est un format de transport de type SIP pour multiplexage avec compression d'en-tête RTP si le type d'interface est une interface A ou une interface Iu.

2. Procédé selon la revendication 1, dans lequel :
le format de transport pour multiplexage avec compression d'en-tête RTP correspondant à l'émetteur ou à la MGW2 consiste en un format de transport par protocole d'ouverture de session, SIP, pour multiplexage avec compression d'entête RTP ou en un format de transport par commande d'appel indépendant du support, BICC, pour multiplexage avec compression d'en-tête RTP.

3. Appareil de traitement d'un paquet de multiplexage avec compression d'en-tête par protocole de transport en temps réel, RTP, l'appareil étant une première passerelle de média, MGW1, qui est connectable à un émetteur, un serveur de commutateur de service mobile, serveur MSC, et une seconde passerelle de média, MGW2, l'émetteur étant un contrôleur de station de base (BSC) ou un contrôleur de réseau de radiocommunication, RNC, l'appareil comprenant :
une unité d'obtention de mode de compression (405), conçue pour obtenir le format de transport pour multiplexage avec compression d'en-tête RTP correspondant à l'émetteur et à la MGW2 ;
une unité de réception (401) conçue pour recevoir un paquet de multiplexage avec compression d'en-tête RTP transmis par l'émetteur ;
une unité de décompression (402), conçue pour décompresser le paquet de multiplexage reçu avec compression d'en-tête RTP en au moins un paquet selon un format de transport pour multiplexage avec compression d'en-tête RTP correspondant à l'émetteur ;
une unité de compression (404), conçue pour compresser l'au moins un paquet selon le format de transport pour multiplexage avec compression d'en-tête RTP correspondant à la MGW2 ; et
une unité d'envoi (403), conçue pour transmettre le paquet compressé à la MGW2 ; et
dans lequel la MGW1 est en outre conçue pour obtenir le format de transport pour multiplexage avec compression d'en-tête RTP correspondant à l'émetteur :
en recevant un message d'indication transmis par le serveur MSC, le message d'indication transportant un type d'interface d'une interface correspondant à l'émetteur ; et
en déterminant que le format de transport pour multiplexage avec compression d'entête RTP correspondant à l'émetteur est un format de transport de type SIP pour multiplexage avec compression d'en-tête RTP si le type d'interface est une interface A ou une interface Iu.
